# FASCICULE DE BREVET EUROPEEN

(11) **EP 1 862 683 B1**
(45) Date de publication et mention de la délivrance du brevet: **21.07.2010**
(21) Numéro de dépôt: 07290664.7
(22) Date de dépôt: 24.05.2007
(51) Int. Cl.: F16C 33/46, F16C 33/66

(54) **Roulement à rouleaux**
Rollenlager
Roller bearing

(30) Priorité: 29.05.2006 FR 0604758
(43) Date de publication de la demande: 05.12.2007
(73) Titulaire: S.N.R. ROULEMENTS, 74000 Annecy (FR)
(72) Inventeur: Lenon, Hervé, 74540 Gruffy (FR); Mermoud, Gérard, 74330 La Balme de Sillingy (FR)
(74) Mandataire: Novagraaf Technologies

(56) Documents cités:
- DE-A1- 1 675 042
- DE-A1- 3 520 814
- DE-A1- 10 119 889
- DE-A1- 19 738 331
- DE-U- 1 894 953
- DE-U- 1 914 884
- FR-A- 2 146 837
- FR-A1- 2 467 319
- JP-A- 2000 145 791
- US-A- 4 993 849

## Description

L'invention concerne un roulement à rouleaux et une cage destinée à un tel roulement, et en particulier un roulement dont la lubrification et le refroidissement sont effectués par circulation d'un liquide lubrifiant, notamment par barbotage dans un bain d'huile. Ce type de roulement trouve son application notamment dans les transmissions automobiles, et tout particulièrement dans les boîtes de vitesse.

Dans l'ensemble de la demande le terme « rouleau » sera utilisé pour désigner indifféremment les rouleaux cylindriques long ou court, les aiguilles et les rouleaux coniques, à moins que le contexte implique un sens plus restreint.

Dans le document FR 2 467 319 est décrit un palier à rouleaux cylindriques présentant une fonction de lubrification forcée. La bague extérieure de ce palier présente une piste de roulement cylindrique et des rebords tournés radialement vers l'intérieur, qui servent notamment à guider latéralement les rouleaux roulant sur la piste. Le palier est muni d'une cage qui présente à ses extrémités une partie annulaire orientée radialement vers l'extérieur et située axialement à l'extérieur du rebord correspondant de la bague extérieure, de manière à chevaucher radialement ce rebord, avec un jeu ménagé entre la partie annulaire et la surface latérale extérieure du rebord. Ce jeu est dimensionné de manière à ne pas empêcher l'écoulement de l'huile. Du fait de la rotation du palier, une circulation d'huile s'établit entre l'intérieur du palier et le milieu extérieur où barbote le palier : l'huile contenue dans le palier est éjectée radialement vers l'extérieur par la partie annulaire et circulaire alors que de l'huile est aspirée axialement le long du palier de l'extérieur vers l'intérieur du palier. Cette circulation forcée de l'huile de lubrification assure la dissipation de la chaleur et l'élimination de la poussière ou d'autres corps étrangers se trouvant dans le palier, mais elle a l'inconvénient de permettre l'intrusion de corps étrangers du milieu extérieur souvent pollué dans le palier.

Dans le document DE 1 914 884 U est par ailleurs décrit un roulement cylindrique à rouleaux comportant une bague extérieure pourvue d'une piste de roulement cylindrique et de rebords tournés radialement vers l'intérieur, une bague intérieure pourvue d'une piste cylindrique et de rebords tournés radialement vers l'extérieur, les rouleaux étant guidés à leurs extrémités axiales par les rebords des bagues intérieure et extérieure. Une cage en matière plastique munie de déflecteurs destinés à empêcher l'intrusion de corps étrangers dans le roulement est constituée en deux parties symétriques formant des peignes cylindriques pourvus dans le plan de séparation transversal de moyens d'agrafage. Chaque demi-cage comporte un anneau continu situé radialement en regard de l'un des rebords de la bague extérieure et pourvu de deux lèvres, l'une s'étendant radialement vers l'extérieur et venant en appui contre une face extérieure du rebord de la bague extérieure, l'autre s'étendant radialement vers l'intérieur et venant en appui contre une face extérieure du rebord de la bague intérieure. Le roulement se trouve donc totalement isolé du milieu extérieur, de sorte qu'en cours d'utilisation, il n'est pas possible de renouveler le lubrifiant situé à l'intérieur du roulement notamment pour dissiper la chaleur produite dans le roulement. De plus, le frottement des lèvres contre les rebords des cages intérieure et extérieure est tout à fait néfaste au fonctionnement du roulement.

Dans le document DE 1 675 042 est décrit par ailleurs un roulement à rouleaux cylindriques dont la bague extérieure comporte un rebord tourné axialement vers l'intérieur. Le roulement est pourvu d'une cage en forme de peigne se composant d'un anneau latéral et d'entretoises de séparation s'étendant depuis cette bague en direction axiale entre les rouleaux. L'anneau est pourvu d'une lèvre tronconique venant en appui axial contre une face latérale intérieure du rebord de la bague extérieure, pour y assurer un guidage de la cage et une étanchéité. Il n'est toutefois pas prévu de circulation de lubrifiant entre l'intérieur et l'extérieur du roulement. De plus, il n'y a pas de possibilité de contact entre les rouleaux et la face transversale intérieure du rebord de la bague extérieure pour le guidage des rouleaux, qui est réalisé par l'intermédiaire de la cage. Les contraintes mécaniques sont importantes, ce qui réduit les possibilités de choix du matériau constitutif de la cage.

Dans l'introduction du document FR 2 146 837 est mentionné, pour le critiquer, un roulement à rouleaux cylindriques dont la bague extérieure est pourvue d'un épaulement de butée et dont la cage se compose d'un anneau et d'un peigne constitué d'entretoises s'étendant, depuis l'anneau, en direction axiale entre les rouleaux. Pour assurer le guidage axial de la cage, les entretoises sont pourvues, sur leur face latérale extérieure, de nez ou de saillies extérieures s'engageant derrière l'épaulement de la bague extérieure, dont la fonction est essentiellement de guider le mouvement de la cage. Du fait des difficultés de montage que présente ce type de cage, qui imposent l'utilisation de matières plastiques souples par ailleurs peu performantes en termes de résistance à l'usure, il est proposé dans le même document de diminuer le nombre de saillies radiales pour faciliter le montage et permettre l'utilisation de matières plastiques rigides. Dans ces dispositifs, la finalité des nez ou saillies des entretoises est essentiellement de guider axialement la cage par frottement contre l'épaulement correspondant de la bague extérieure.

Dans le document US 4,993,849 est décrit un roulement à rouleaux dont la bague extérieure est pourvue d'une piste cylindrique et d'un rebord tourné radialement vers l'intérieur. Les rouleaux sont guidés par une cage pourvue à son extrémité axiale d'un anneau formant une gorge annulaire ouverte radialement vers l'extérieur et dans laquelle vient s'insérer l'extrémité libre du rebord de la bague extérieure. Le rebord n'est toutefois pas de dimension radiale constante et présenté une large ouverture pour permettre le montage de la cage. Cette large ouverture ne permet pas d'assurer correctement une fonction d'étanchéité.

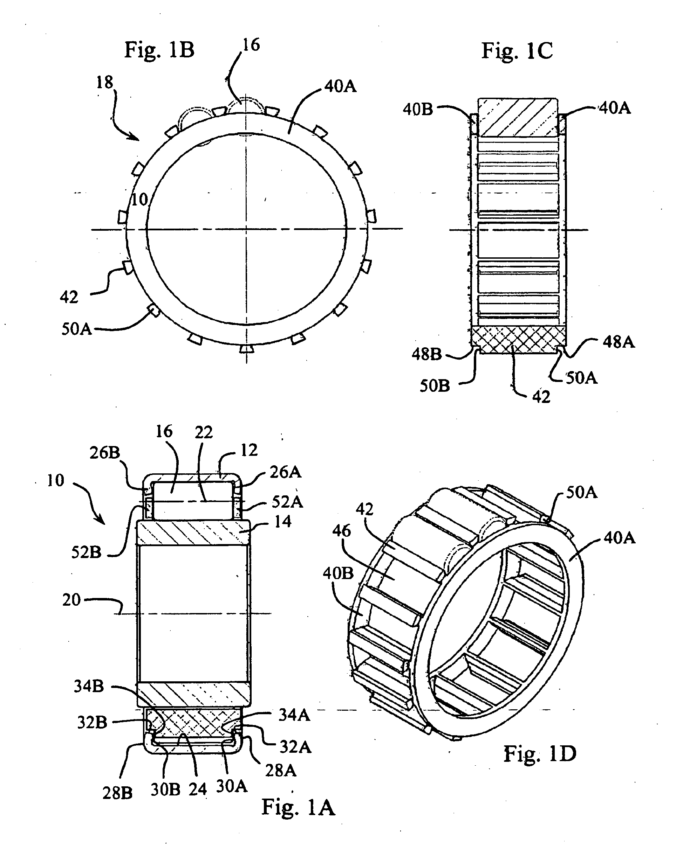

Dans le document JP 2000 145791 est décrit un roulement à rouleaux comprenant une première bague pourvue d'au moins un premier chemin de roulement et d'au moins un rebord annulaire formant une face intérieure sensiblement perpendiculaire au chemin de roulement, une face extérieure d'appui et un chant reliant les faces intérieure et extérieure, une cage généralement annulaire comprenant au moins un anneau d'extrémité disposé en regard et du chant et des entretoises délimitant des alvéoles, un premier jeu fonctionnel étant ménagé entre l'anneau et le chant de la première bague, et des rouleaux disposés dans les alvéoles, et roulant sur la piste de roulement, les rouleaux ayant chacun une extrémité axiale située partiellement en regard de la face intérieure du rebord de la bague et guidée axialement par le rebord, les entretoises formant chacune un épaulement d'extrémité situé en regard de la face intérieure du rebord, un deuxième jeu fonctionnel étant ménagé entre la face intérieure du rebord et les épaulements des entretoises, le premier et le deuxième jeux fonctionnels étant dimensionnés pour former un chicanage permettant le passage du lubrifiant. Un autre roulement de ce type est illustré par les figures 1A à 1D qui seront décrites ci-après. La cage obtenue est assez massive.

L'invention vise donc à remédier aux inconvénients de l'état de la technique, de manière à proposer un roulement à rouleaux destiné à être lubrifié par circulation d'un fluide de lubrification, assurant une bonne lubrification du roulement tout en évitant l'intrusion de corps étranger dans le roulement, et qui ait de bonnes performances en termes de frottement et de moment d'inertie.

A cet effet, l'invention a pour objet un roulement à rouleaux destiné à être lubrifié par circulation d'un liquide lubrifiant et comprenant au moins une première bague pourvue d'au moins un premier chemin de roulement et d'au moins un rebord annulaire formant une face intérieure sensiblement perpendiculaire au chemin de roulement, une face extérieure d'appui et un chant reliant les faces intérieure et extérieure, une cage généralement annulaire comprenant au moins un anneau d'extrémité disposé en regard du chant et des entretoises délimitant des alvéoles, un premier jeu fonctionnel étant ménagé entre l'anneau et le chant de la première bague, et des rouleaux disposés dans les alvéoles, et roulant sur la piste de roulement, les rouleaux ayant chacun une extrémité axiale située partiellement en regard de la face intérieure du rebord de la bague et guidée axialement par le rebord, les entretoises formant chacune un épaulement d'extrémité situé en regard de la face intérieure du rebord, un deuxième jeu fonctionnel étant ménagé entre la face intérieure du rebord et les épaulements des entretoises, le premier et le deuxième jeux fonctionnels étant dimensionnés pour former un chicanage permettant le passage du lubrifiant, le chant du rebord de la première bague est situé radialement à l'intérieur d'un volume circonscrit par l'axe de rotation des rouleaux lors de la rotation de la cage. Le rebord constitue ainsi lui-même une partie de la barrière restreignant l'ouverture du roulement. On obtient ainsi une excellente barrière contre l'intrusion de corps étrangers solides tels que des limailles, sans entraver la circulation du fluide de lubrification. Ces performances sont obtenues sans contact entre la cage et les bagues, donc sans frottement solide.

Préférentiellement, la cage est située entièrement d'un côté d'un plan tangent à la face extérieure d'appui de la première bague. L'encombrement axial du roulement est ainsi minimisé et l'on peut utiliser la face d'extérieure d'appui de la première bague pour le maintien de la bague.

Selon un mode de réalisation, l'anneau comporte une pluralité de projections orientées du côté opposé au chant. Les projections permettent de minimiser le jeu entre la cage et l'élément sur lequel roulent les rouleaux, qu'il s'agisse d'une bague intérieure ou d'un arbre.

Avantageusement, les entretoises sont pourvues d'échancrures. On réalise ainsi un évidemment pour limiter les surfaces de contact entre la cage et les rouleaux et pour épargner de la matière.

Selon un mode de réalisation, la face intérieure du rebord est convexe et contacte chaque rouleau en un point situé radialement à l'extérieur de la surface de révolution décrite par l'axe de rotation des rouleaux lors de la rotation de la cage.

L'application principale de l'invention a trait aux roulements à rouleaux cylindriques et chemins de roulement cylindriques, la première bague étant dans ce cas une bague extérieure. Toutefois, suivant les modes de réalisation, le chemin de roulement de la première bague peut être cylindrique, tronconique ou plan et les rouleaux peuvent quant à eux être cylindriques ou tronconiques.

Préférentiellement, la première bague est réalisée en tôle emboutie. Alternativement, la bague peut être également usinée.

Selon un mode de réalisation, le roulement comporte une bague intérieure pourvue d'une piste de roulement sur laquelle roulent les rouleaux. Alternativement, le roulement peut coopérer directement avec un arbre.

Selon un mode de réalisation, la première bague est pourvue de deux rebords d'extrémité, chaque rebord formant une face intérieure sensiblement perpendiculaire au chemin de roulement, une face extérieure d'appui et un chant reliant les faces intérieure et extérieure. La cage comprend dans ce cas deux anneaux d'extrémité disposés chacun en regard du chant d'un des rebords de la première bague, les entretoises s'étendant entre les deux anneaux pour délimiter les alvéoles. Les rouleaux ont deux extrémités axiales situées chacune partiellement en regard de la face intérieure d'un des deux rebords de la bague et guidées axialement par le rebord correspondant. Les entretoises forment chacune deux épaulements d'extrémité situés chacun en regard de la face intérieure d'un des rebords, des jeux fonctionnels étant ménagés d'une part entre les anneaux et les chants, et d'autre part entre les faces intérieures et les épaulements, les jeux fonctionnels étant dimensionnés pour former un chicanage permettant le passage du lubrifiant. Préférentiellement, les rebords de la première bague présentent chacun une face extérieure d'appui, la cage étant entièrement située entre deux plans tangents chacun à l'une des faces extérieures d'appui.

On retrouve donc dans ce cas des dispositions similaire, voire symétriques, à chaque extrémité axiale du roulement.

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1A illustre une coupe axiale d'un roulement cylindrique qui n'entre pas dans le cadre de l'invention ;
- la figure 1B représente une vue de face d'une cage du roulement de la figure 1A ;
- la figure 1C représente une vue en coupe axiale de la cage B suivant le plan de coupe A-A de la figure 1B ;
- la figure 1D représente une vue en perspective de la cage du roulement de la figure 1A ;
- la figure 2A illustre une coupe axiale d'un roulement cylindrique selon une variante n'entrant pas dans le champ de l'invention ;
- la figure 2B représente une vue de face d'une cage du roulement de la figure 2A ;
- la figure 2C représente une vue en coupe axiale de la cage suivant le plan de coupe A-A de la figure 2B ;
- la figure 2D représente une vue en perspective de la cage du roulement de la figure 2B ;
- la figure 3A illustre une coupe axiale d'un roulement cylindrique selon un mode de réalisation de l'invention ;
- la figure 3B représente une vue de face d'une cage du roulement selon la figure 3A ;
- la figure 3C représente une vue en coupe axiale de la cage suivant le plan de coupe A-A de la figure 3B ;
- la figure 3D représente une vue en perspective de la cage de la figure 3B ;
- la figure 3E représente une vue en perspective de la cage de la figure 3B ;
- la figure 4A illustre une coupe axiale d'un roulement cylindrique selon une variante n'entrant pas dans le champ de l'invention ;
- la figure 4B représente une vue de face d'une cage du roulement selon la figure 4A ;
- la figure 4C représente une vue en coupe axiale de la cage suivant le plan de coupe A-A de la figure 4B ;
- la figure 4D représente une vue en perspective de la cage de la figure 4B ;
- la figure 5A représente une vue en perspective d'une cage selon une variante n'entrant pas dans le champ de l'invention ;
- la figure 5B représente une vue en coupe axiale de la cage du roulement de la figure 5A ;
- la figure 5C représente une vue en perspective de la cage du roulement de la figure 5A, avant montage.

Dans la description des différents modes de réalisation et variantes, les mêmes signes de référence ont été utilisés pour identifier des éléments identiques ou similaires.

Le roulement à rouleaux 10 illustré sur les figures 1A à 1D est composé d'une bague extérieure 12 réalisée en tôle emboutie, d'une bague intérieure 14 cylindrique et de rouleaux 16 guidés par une cage 18 en matière plastique. On a également représenté l'axe géométrique de rotation 20 relative entre les deux bagues 12, 14 et l'axe de rotation 22 d'un rouleau, qui décrit une enveloppe cylindrique lors de la révolution du rouleau autour de l'axe du roulement.

La bague extérieure 12 forme un chemin de roulement cylindrique 24 et est pourvue de deux rebords annulaires d'extrémité axiale 26A, 26B, repliés radialement vers l'intérieur du roulement, c'est-à-dire vers l'axe géométrique 20, définissant ainsi chacun une face d'appui extérieure 28A, 28B, permettant le positionnement de la bague extérieure 12 par rapport à l'élément qui la supporte, une face de guidage 30A, 30B, sensiblement transversale et perpendiculaire au chemin de roulement, un chant 32A, 32B faisant face à la bague intérieure 14 et une arête de guidage 34A, 34B à la jonction entre le chant et la face de guidage.

La cage 18 est formée par deux anneaux d'extrémité 40A, 40B reliés par des entretoises 42 s'étendant en direction axiale et angulairement à distance les unes des autres pour former entre elles des alvéoles 46 dans lesquelles viennent se loger les rouleaux 16. Les anneaux 40A, 40B ont chacun une face radiale 48A, 48B située en regard du chant 32A, 32B du rebord correspondant de la bague extérieure. L'épaisseur des anneaux, mesurée radialement, est inférieure à la distance entre la bague intérieure et les chants, de manière à préserver un jeu fonctionnel suffisant avec les chants d'une part, et avec la bague intérieure d'autre part. L'épaisseur des entretoises 42, mesurée également dans la direction radiale, est plus importante que l'épaisseur des anneaux 40, et de préférence plus importante que la distance entre bague intérieure 14 et les chants 32A, 32B. Un épaulement 50A, 50B, est ainsi formé à chaque extrémité axiale des entretoises 42. Ces épaulements 50A, 50B sont situés au moins partiellement en regard et à distance des faces de guidage 30A, 30B et de l'arête de guidage 34A, 34B, préservant ainsi un jeu fonctionnel.

Les rouleaux cylindriques 16 sont logés dans les alvéoles 46 et forment chacun une surface cylindrique de roulement qui vient au contact des chemins de roulement, et deux faces transversales d'extrémité 52A, 52B, qui sont guidées d'une part par les anneaux d'extrémité 40A, 40B de la cage et d'autre part par la face de guidage 30A, 30B ou l'arête de guidage 34A, 34B.

On notera que dans ce mode de réalisation les arêtes de guidage 34A, 34B sont situées radialement en dehors de l'enveloppe cylindrique définie par les axes de rotation 22 des rouleaux, de sorte que le contact entre les rouleaux 16 et l'arête de guidage 34A, 34B ou la face de guidage 30A, 30B, s'effectue également à l'extérieur de l'enveloppe cylindrique définie par les axes de rotation 22 des rouleaux.

Les anneaux 40A, 40B viennent partiellement fermer l'ouverture existant entre les rebords 26A, 26B de la bague extérieure et la bague intérieure 14, constituant une première barrière contre des corps étrangers susceptibles de s'introduire dans le roulement. Les faces transversales 52A, 52B des rouleaux forment une deuxième barrière contre l'intrusion de corps étrangers, axialement en retrait par rapport aux anneaux 40A, 40B. Les épaulements 50A, 50B des entretoises de la cage viennent compléter cette deuxième barrière tout en préservant, du fait des jeux fonctionnels, une voie d'entrée suffisante pour l'huile dans laquelle barbote le roulement. A ce niveau, le chicanage dû à l'épaulement 50A, 50B permet de bloquer les corps étrangers solides, de manière à filtrer l'huile entrant dans le roulement par cette voie. Ce chicanage n'est certes constitué que par secteurs angulaires, au niveau de chaque entretoise 42, mais une continuité est réalisée de manière dynamique, dès que le roulement est en rotation. Le chicanage est obtenu sans qu'une partie de la cage vienne recouvrir, même partiellement, la face d'appui 28A, 28B des rebords. Le positionnement axial de la bague est obtenu par l'intermédiaire des rouleaux 16, dont les faces transversales 52A, 52B sont au contact d'une part avec les rebords 26A, 26B au niveau des arêtes 34A, 34B, et d'autre part avec les anneaux 40A et 40B.

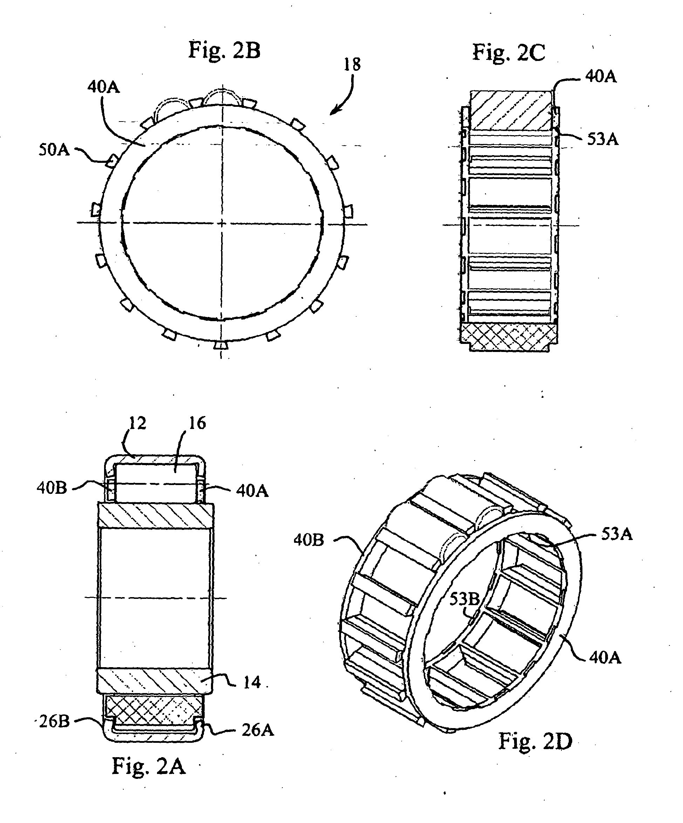

Le roulement des figures 2A à 2D ne diffère du précédent que par l'adjonction, au niveau des anneaux d'extrémité de la cage, de créneaux 53A, 53B faisant saillie radialement vers l'intérieur et qui ont de préférence une épaisseur, mesurée dans le sens axial, moindre que l'épaisseur axiale des bagues 40A, 40B. Ces créneaux 53A, 53B limitent la surface de contact entre la cage et la bague intérieure, tout en constituant une barrière supplémentaire à l'intrusion de corps étrangers, lorsque le roulement tourne. Pour faciliter le moulage de la cage 18, les créneaux 53A de l'anneau 40A sont de préférence décalés angulairement par rapport aux créneaux 53B de l'anneau 40B, de manière à former une structure en quinconce.

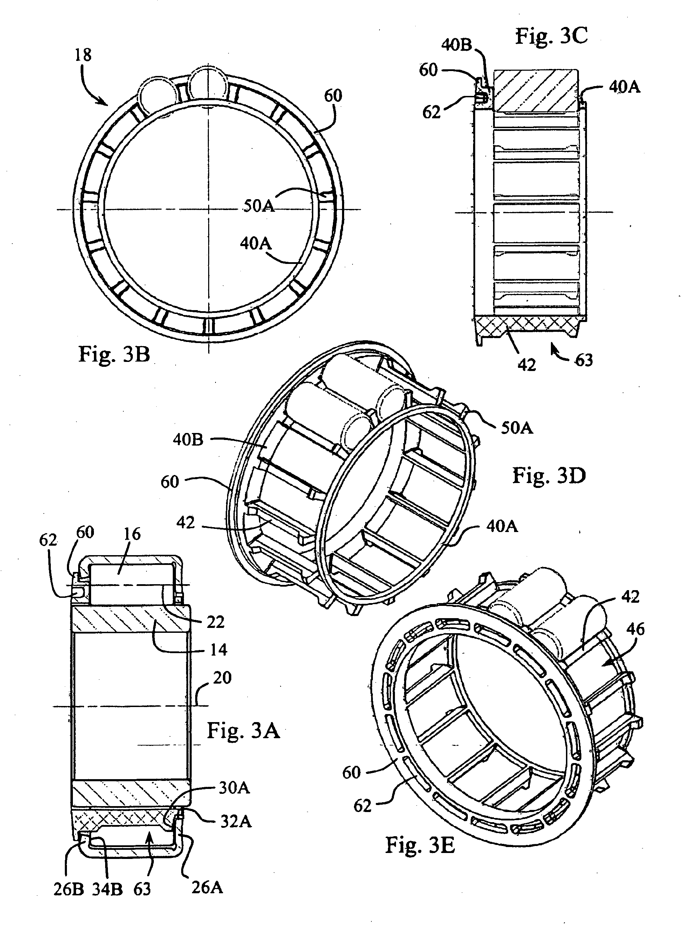

Le roulement des figures 3A à 3E se distingue des précédents à la fois par la forme de la bague extérieure et par celle de la cage.

La bague extérieure est en effet pourvue, à une première extrémité axiale, d'un rebord 26A qui se prolonge radialement vers la bague intérieure, de sorte que le chant 32A du rebord 26A se situe radialement à l'intérieur de l'enveloppe cylindrique décrite par l'axe 22 des rouleaux. Ce rebord 26A est bombé de sorte que la surface de guidage 30A est légèrement convexe. A l'extrémité axiale opposée, le rebord 26B de la bague extérieure 12 est identique aux modes de réalisation précédents. Les rouleaux cylindriques 16 viennent d'un côté au contact de l'arête de guidage 34B et de l'autre au contact de la surface convexe 30A. Pour éviter un déséquilibre dynamique, la distance entre l'axe de rotation 20 du roulement et le point de contact du rouleau 16 avec l'arête 34B est égale à la distance entre l'axe de rotation 20 du roulement et le point de contact de la surface convexe 30A avec le rouleau 16, cette distance étant par ailleurs supérieure à la distance entre l'axe de rotation 20 du roulement et l'axe de rotation 22 du rouleau.

La cage 18 est pourvue, à son extrémité axiale correspondant au rebord 26A, d'un anneau d'extrémité 40A d'épaisseur radiale réduite, préservant un jeu fonctionnel avec la bague intérieure 14 et un jeu fonctionnel avec le chant 32A. A cette même extrémité axiale, les entretoises 42 forment chacune un épaulement 50A qui vient en regard et à distance de la face de guidage 30A du rebord 26A, en préservant un jeu fonctionnel. A l'extrémité axiale opposée, la cage 18 est pourvue d'un anneau 40B formant un déflecteur 60 faisant saillie axialement à l'extérieur du rebord 26B et venant radialement recouvrir partiellement le rebord 26B, de manière à former un chicanage extérieur. Le déflecteur 60 peut être pourvu de trous borgnes 62 pour limiter la quantité de matière et alléger la structure de la cage. Entre les deux anneaux 40A, 40B, les entretoises 42 présentent une échancrure 63 permettant de limiter la quantité de matière, le moment d'inertie de la cage et la surface de contact entre entretoises et rouleaux.

On constatera que l'allongement du rebord 26A contribue à la fermeture de l'espace existant entre la bague extérieure 12 et la bague intérieure 14. A l'extrémité opposée, le déflecteur augmente quelque peu l'encombrement axial de la cage par rapport aux modes de réalisation précédents, mais permet une introduction plus aisée de la cage 18 dans la bague extérieure 12.

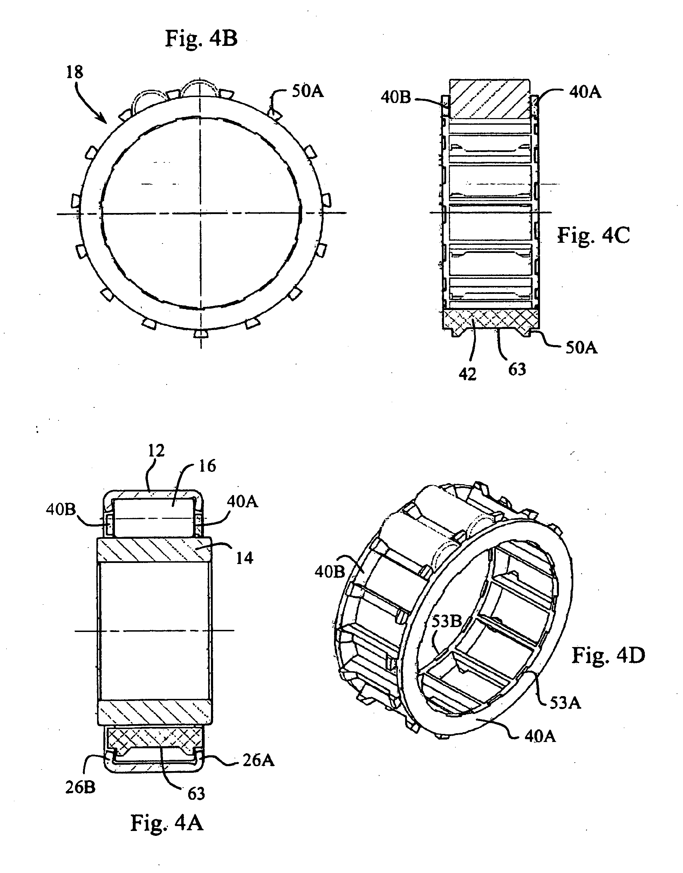

Le roulement des figures 4A à 4D combine certaines des solutions précédemment décrites. Il comporte notamment les créneaux 53A, 53B du deuxième mode de réalisation et les échancrures 63 du troisième mode de réalisation, le reste de la structure du roulement étant similaire au premier mode de réalisation.

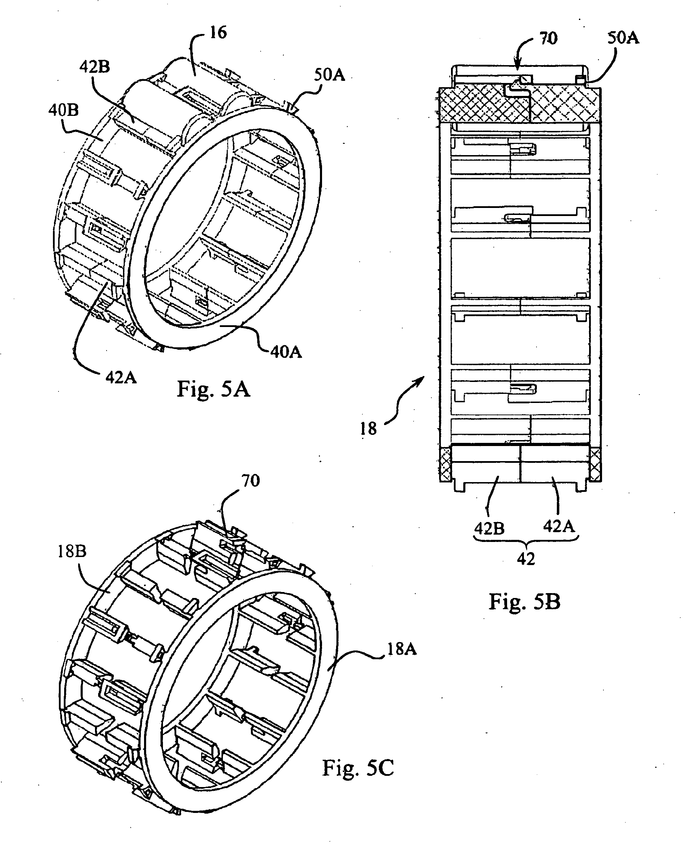

Le roulement des figures 5A à 5C diffère des variantes et du mode de réalisation précédent essentiellement par le fait que la cage 18 est constituée en deux pièces 18A, 18B, chaque pièce comportant un anneau d'extrémité 40A, 40B et des demi-entretoises 42A, 42B formant un peigne cylindrique. Les demi-entretoises 42A, 42B des deux pièces coopèrent deux à deux pour former des entretoises 42, certaines au moins des demi-entretoises étant pourvues à leur extrémité libre de moyens 70 de fixation par encliquetage sur l'extrémité libre de la demi-entretoise correspondante de l'autre pièce. De préférence, les deux pièces constituant la cage sont identiques.

Si la cage est réalisée en deux pièces, on peut ainsi envisager que l'une des pièces comporte un anneau d'extrémité et les entretoises formant un peigne cylindrique, munies à leur extrémité libre de moyens de fixation, par exemple par encliquetage dans la deuxième pièce constituée essentiellement par un anneaux. On peut également envisager deux pièces identiques formées chacune d'un anneau et d'un peigne d'entretoises, l'extrémité de chaque entretoise venant se fixer sur l'anneau opposée de manière à former une cage dont le nombre d'alvéoles est double du nombre d'entretoises de chaque pièce de la cage.

Bien que les exemples de réalisation incluent tous une bague intérieure, il est clair que l'invention est également applicable à un palier de roulement sans bague intérieure. La lubrification peut être obtenue soit par barbotage dans un bain d'huile, soit par projection d'huile.

L'une ou l'autre bague peut également être remplacée par deux bagues.

L'invention est également applicable à des roulements à rouleaux tronconiques et à des roulements de butée pour lesquels l'axe de rotation des rouleaux est incliné, voire perpendiculaire, par rapport à l'axe de rotation du roulement.

## Revendications

1. Roulement à rouleaux destiné à être lubrifié par circulation d'un liquide lubrifiant et comprenant :
- au moins une première bague (12) pourvue d'au moins un premier chemin de roulement (24) et d'au moins un rebord annulaire (26A, 26B) formant une face intérieure (30A, 30B) sensiblement perpendiculaire au chemin de roulement (24), une face extérieure d'appui (28A, 28B) et un chant (34A, 34B) reliant les faces intérieure et extérieure,
- une cage (18) généralement annulaire comprenant au moins un anneau d'extrémité (40A, 40B) disposé en regard du chant (34A, 34B) et des entretoises (42) délimitant des alvéoles (46), un premier jeu fonctionnel étant ménagé entre l'anneau et le chant de la première bague, les entretoises (42) formant chacune un épaulement (50A, 50B) d'extrémité situé en regard de la face intérieure (30A, 30B) du rebord, un deuxième jeu fonctionnel étant ménagé entre la face intérieure du rebord et les épaulements des entretoises, le premier et le deuxième jeux fonctionnels étant dimensionnés pour former un chicanage permettant le passage du lubrifiant, et
- des rouleaux (16) disposés dans les alvéoles (46), et roulant sur la piste de roulement (24), les rouleaux (16) ayant chacun une extrémité axiale (52A, 52B) située partiellement en regard de la face intérieure (30A, 30B) du rebord de la bague et guidée axialement par le rebord (26A, 26B), **caractérisé en ce que** le chant (32A) du rebord de la première bague est situé radialement à l'intérieur d'une surface de révolution décrite par l'axe de rotation (22) des rouleaux lors de la rotation de la cage (18).

2. Roulement selon la revendication 1, **caractérisé en ce que** la cage est située entièrement d'un côté d'un plan tangent à la face extérieure d'appui (28A, 28B) de la première bague.

3. Roulement selon la revendication 1 ou la revendication 2, **caractérisé en outre en ce que** l'anneau (18) comporte une pluralité de projections (53A, 53B) orientées du côté opposé au chant (32A, 32B).

4. Roulement selon l'une quelconque des revendications précédentes, entre outre **caractérisé en ce que** les entretoises (42) sont pourvues d'échancrures (63).

5. Roulement selon l'une quelconque des revendications précédentes, **caractérisé en ce que** le chemin de roulement (24) de la première bague est cylindrique.

6. Roulement selon l'une quelconque des revendications 1 à 4, **caractérisé en ce que** le chemin de roulement (24) de la première bague est tronconique.

7. Roulement selon l'une quelconque des revendications précédentes, en outre **caractérisé en ce que** la face intérieure (30A), 30B) du rebord est convexe et contacte chaque rouleau en un point situé radialement à l'extérieur du volume circonscrit par l'axe de rotation (22) des rouleaux lors de la rotation de la cage (18).

8. Roulement selon l'une quelconque des revendications précédentes, **caractérisé en outre en ce qu'**il comporte une bague intérieure (14) pourvue d'une piste de roulement sur laquelle roulent les rouleaux.

9. Roulement selon l'une quelconque des revendications 1 à 4, **caractérisé en ce que** le chemin de roulement de la première bague est plan.

10. Roulement selon l'une quelconque des revendications précédentes, **caractérisé en outre en ce que** les rouleaux (16) sont cylindriques.

11. Roulement, selon l'une quelconque des revendications précédentes, **caractérisé en outre en ce que** la première bague (12) est réalisée en tôle emboutie.

12. Roulement selon l'une quelconque des revendications précédentes, **caractérisé en outre en ce que**
- la première bague est pourvue de deux rebords d'extrémité (26A, 26B) , chaque rebord formant une face intérieure (30A, 30B) sensiblement perpendiculaire au chemin de roulement, une face extérieure d'appui (28A, 28B) et un chant (32A, 32B) reliant les faces intérieure et extérieure,
- la cage (18) comprend deux anneaux d'extrémité (40A, 40B) disposés chacun en regard du chant (32A, 32B) d'un des rebords de la première bague, les entretoises (42) s'étendant entre les deux anneaux pour délimiter les alvéoles (46),
- les rouleaux (16) ont deux extrémités axiales (52A, 52B) situées chacune partiellement en regard de la face intérieure (30A, 30B) d'un des deux rebords de la bague et guidées axialement par le rebord (26A, 26B) correspondant,
- les entretoises (42) forment chacune deux épaulements (50A, 50B) d'extrémité situés chacun en regard de la face intérieure (30A, 30B) d'un des rebords, des jeux fonctionnels étant ménagés d'une part entre les anneaux (40A, 40B) et les chants (32A, 32B), et d'autre part entre les faces intérieures (30A, 30B) et les épaulements (50A, 50B), les jeux fonctionnels étant dimensionnés pour former un chicanage permettant le passage du lubrifiant.

13. Roulement selon la revendication 12, **caractérisé en outre en ce que** les rebords (26A, 26B) de la première bague présentent chacun une face extérieure d'appui (28A, 28B), la cage (18) étant entièrement située entre deux plans tangents chacun à l'une des faces extérieures d'appui.

## Claims

1. A roller bearing intended to be lubricated through the circulation of a lubricating fluid and including:
- at least a first ring (12) provided with a least a first raceway (24) and at least one annular rim (26A, 26B) forming an inner face (30A, 30B) substantially perpendicular to the raceway (24), an outer retaining face (28A, 28B) and an edge (34A, 34B) connecting the inner and outer faces,
- a generally annular cage (18) including at least a cage end ring (40A, 40B) positioned opposite the edge (34A, 34B) and spacers (42) delimiting compartments (46), a first functional clearance being arranged between the cage ring and the edge of the first ring, the spacers (42) forming, each, an end shoulder (50A, 50B) positioned opposite the inner face (30A, 30B) of the rim, a second functional clearance being arranged between the inner face of the rim and the shoulders of the spacers, the dimensions of the first and the second functional clearances being such that they form a labyrinth allowing the passage of the lubricant, and
- rollers (16) positioned in the compartments (46) and rolling on the raceway (24), the rollers (16) having each an axial end (52A, 52B) partially located opposite the inner face (30A, 30B) of the rim of the ring and axially guided by the rim (26A, 26B),
**characterized in that** the edge (32A) of the rim of the first ring is located radially inside the surface of a revolution described by the axis of rotation (22) of the rollers upon the rotation of the cage (18).

2. A bearing according to claim 1, **characterized in that** the cage is integrally located on one side of a plane tangential to the outer retaining face (28A, 28B) of the first ring.

3. A bearing according to claim 1 or claim 2, further **characterized in that** the cage ring (18) includes a plurality of protrusions (53A, 53B) oriented to the side opposite the edge (32A, 32B).

4. A bearing according to any one of the preceding claims, further **characterized in that** the spacers (42) are provided with notches (63).

5. A bearing according to any one of the preceding claims, **characterized in that** the raceway (24) of the first ring is cylindrical.

6. A bearing according to any one of claims 1 to 4, **characterized in that** the raceway (24) of the first ring is tapered.

7. A bearing according to any one of the preceding claims, further **characterized in that** the inner face (30A, 30B) of the rim is convex and in contact with each roller at a point located radially outside the volume circumscribed by the axis of rotation (22) of the rollers during the rotation of the cage (18).

8. A bearing according to any one of the preceding claims, further **characterized in that** it includes an inner ring (14) provided with a raceway whereon the rollers roll.

9. A bearing according to any one of claims 1 to 4, **characterized in that** the raceway of the first ring is plane.

10. A bearing according to any one of the preceding claims, further **characterized in that** the rollers (16) are cylindrical.

11. A bearing according to any one of the preceding claims, further **characterized in that** the first ring (12) is made of stamped sheet metal.

12. A bearing according to any one of the preceding claims, further **characterized in that**:
- the first ring is provided with two end rims (26A, 26B), each rim forming an inner face (30A, 30B) substantially perpendicular to the raceway, an outer retaining face (28A, 28B) and an edge (32A, 32B) connecting the inner and outer faces,
- the cage (18) includes two cage end rings (40A, 40B) each one being positioned opposite the edge (32A, 32B) of one of the rims of the first ring, with the spacers (42) extending between the two cage end rings to delimit the compartments (46),
- the rollers (16) have two axial ends (52A, 52B), each being partially located opposite the inner face (30A, 30B) of one of the two rims of the ring and axially guided by the matching rim (26A, 26B),
- the spacers (42) each form two end shoulders (50A, 50B), each one being located opposite the inner face (30A, 30B) of one of the rims, functional clearances being provided on the one hand between cage end rings (40A, 40B) and the edges (32A, 32B), and on the other hand between the inner faces (30A, 30B) and the shoulders (50A, 50B), with the dimensions of the functional clearances being such that they form a labyrinth allowing the passage of the lubricant.

13. A bearing according to claim 12, further **characterized in that** the rims (26A, 26B) of the first ring each have an outer retaining face (28A, 28B), with the cage (18) being integrally located between two planes tangential to one of the outer retaining faces.

## Patentansprüche

1. Rollenlager, das durch Umlauf einer Schmierflüssigkeit geschmiert werden soll und folgende Teile umfaßt:
- mindestens einen ersten Ring (12), der mindestens mit einem ersten Laufbahnkreis (24) und mindestens einem ringförmigen Rand (26A, 26B) versehen ist, der eine Innenfläche (30A, 30B) im wesentlichen senkrecht zum Laufbahnkreis (24), eine äußere Auflagefläche (28A, 28B) und eine Kante (34A, 34B) bildet, die die Innenfläche und die Außenfläche verbindet,
- einen im allgemeinen ringförmigen Käfig (18), der mindestens einen Endring (40A, 40B) umfaßt, der gegenüber der Kante (34A, 34B) angeordnet ist, und Stege (42), die Zellen (46) abgrenzen, wobei zwischen dem Endring und der Kante des ersten Rings ein erstes funktionelles Spiel gestaltet ist, wobei die Stege (42) jeweils eine Endschulter (50A, 50B) bilden, die sich gegenüber der Innenfläche (30A, 30B) des Rands befindet, wobei zwischen der Innenfläche der Kante und den Schultern der Stege ein zweites funktionelles Spiel gestaltet ist, wobei das erste und das zweite funktionelle Spiel dimensioniert sind, um eine Ablenkung zu bilden, die den Durchgang der Schmierflüssigkeit zuläßt,
- in den Zellen (46) angeordnete Rollen (16), die auf dem Laufbahnkreis (24) rollen, wobei die Rollen (16) jeweils ein axiales Ende (52A, 52B) haben, das sich teilweise gegenüber der Innenfläche (30A, 30B) des Rands des Rings befindet und vom Rand (26A, 26B) axial geführt wird,
**dadurch gekennzeichnet, daß** sich die Kante (32A) des Rands des ersten Rings radial im Innern einer Rotationsfläche befindet, die von der Drehachse (22) der Rollen bei der Drehung des Käfigs (18) beschrieben wird.

2. Rollenlager nach Anspruch 1, **dadurch gekennzeichnet, daß** sich der Käfig ganz auf einer Seite einer Ebene tangential zur äußeren Auflagefläche (28A, 28B) des ersten Rings befindet.

3. Rollenlager nach Anspruch 1 oder Anspruch 2, ferner **dadurch gekennzeichnet, daß** der Ring (18) eine Mehrzahl Projektionen (53A, 53B) umfaßt, die zur der Kante (32A, 32B) entgegengesetzten Seite ausgerichtet sind.

4. Rollenlager nach einem beliebigen der vorstehenden Ansprüche, ferner **dadurch gekennzeichnet, daß** die Stege (42) mit Ausschnitten (63) versehen sind.

5. Rollenlager nach einem beliebigen der vorstehenden Ansprüche, **dadurch gekennzeichnet, daß** der Laufbahnkreis (24) des ersten Rings zylinderförmig ist.

6. Rollenlager nach einem beliebigen der vorstehenden Ansprüche 1 bis 4, **dadurch gekennzeichnet, daß** der Laufbahnkreis (24) des ersten Rings kegelstumpfförmig ist.

7. Rollenlager nach einem beliebigen der vorstehenden Ansprüche, ferner **dadurch gekennzeichnet, daß** die Innenfläche (30A, 30B) des Rands konvex ist und jede Rolle an einem Punkt berührt, der sich radial außerhalb des Volumens befindet, das von der Drehachse (22) der Rollen bei der Rotation des Käfigs (18) beschrieben wird.

8. Rollenlager nach einem beliebigen der vorstehenden Ansprüche, ferner **dadurch gekennzeichnet, daß** es einen Innenring (14) umfaßt, der mit einer Rollspur versehen ist, auf der die Rollen laufen.

9. Rollenlager nach einem beliebigen der vorstehenden Ansprüche 1 bis 4, **dadurch gekennzeichnet, daß** der Laufbahnkreis (24) des ersten Rings eben ist.

10. Rollenlager nach einem beliebigen der vorstehenden Ansprüche, ferner **dadurch gekennzeichnet, daß** die Rollen (16) zylinderförmig sind.

11. Rollenlager nach einem beliebigen der vorstehenden Ansprüche, ferner **dadurch gekennzeichnet, daß** der erste Ring (12) aus tiefgezogenem Blech ausgeführt ist.

12. Rollenlager nach einem beliebigen der vorstehenden Ansprüche, ferner **dadurch gekennzeichnet, daß**
- der erste Ring mit zwei Endrändern (26A, 26B) versehen ist, wobei jeder Rand eine Innenfläche (30A, 30B) bildet, die deutlich senkrecht zum Laufbahnkreis steht, wobei eine äußere Auflagefläche (28A, 28B) und eine Kante (32A, 32B) die Innenfläche und die Außenfläche verbindet,
- der Käfig (18) zwei Endringe (40A, 40B) umfaßt, die jeweils gegenüber der Kante (32A, 32B) eines der Ränder des ersten Rings angeordnet sind, wobei sich die Stege (42) zwischen den beiden Endringen erstrecken, um die Zellen (46) abzugrenzen,
- die Rollen (16) zwei axiale Enden (52A, 52B) haben, die sich jeweils teilweise gegenüber der Innenfläche (30A, 30B) eines der beiden Ränder des Rings befinden und vom entsprechenden Rand (26A, 26B) axial geführt werden,
- die Stege (42) jeweils zwei Endschultern (50A, 50B) bilden, die sich jeweils gegenüber der Innenfläche (30A, 30B) eines der Ränder befinden, wobei einerseits zwischen den Endringen (40A, 40B) und den Kanten (32A, 32B) und andererseits zwischen den Innenflächen (30A, 30B) und den Schultern (50A, 50B) funktionelle Spiele gestaltet sind, wobei die funktionellen Spiele dimensioniert sind, um eine Ablenkung zu bilden, die den Durchgang der Schmierflüssigkeit zuläßt.

13. Rollenlager nach Anspruch 12, außerdem **dadurch gekennzeichnet, daß** die Ränder (26A, 26B) des ersten Rings jeweils eine äußere Auflagefläche (28A, 28B) aufweisen, wobei der Käfig (18) sich vollkommen zwischen zwei jeweils mit einer der äußeren Auflageflächen tangentialen Ebenen befindet.
